# EUROPEAN PATENT APPLICATION

(11) **EP 4 712 122 A1**
(43) Date of publication of application: **18.03.2026**
(21) Application number: 25201178.8
(22) Date of filing: 09.09.2025
(51) Int. Cl.: H01H 9/54, H01H 9/42, H02H 3/02, H02H 3/087, H01H 33/59

(54) **CIRCUIT INTERRUPTER USING INDUCTOR CONNECTION WITH STAGED SWITCHING TO ACHIEVE VARIABLE INDUCTANCE DURING CURRENT INTERRUPTION**

(30) Priority: 13.09.2024 US 202463694275 P
(71) Applicant: Eaton Intelligent Power Limited, Dublin 4 (IE)
(72) Inventor: RAMAMURTHY, Shyam Sunder, Pittsburgh, 15237 (US); ZHOU, Xin, Wexford, 15090 (US)
(74) Representative: Collingwood-Pierce, Alexandra Isobel Seymour

(57) **Abstract**

A circuit interrupter includes an inductor module connected in series with a hybrid interrupter switch between a power source and a load. The inductor module includes a coupled inductor comprising a primary winding connected in series between the power source and the interrupter module, and a secondary winding connected at its line side to the power source. The secondary winding load side is connected to a first stage switching device, with the first stage switching device forming a switch between the secondary winding and the interrupter module. The first stage switching device and the hybrid interrupter switch are kept closed under normal current conditions. During a fault, the first stage switching device is opened first, which significantly increases flux in the inductor module and impedance of the circuit, and consequently decreases current through the interrupter module. The hybrid switch is opened second to complete interruption.

## Description

### CROSS REFERENCE TO RELATED APPLICATIONS

This application claims priority to U.S. Provisional Patent Application Serial No. 63/694,275, filed on September 13, 2024, and titled "CIRCUIT INTERRUPTER USING INDUCTOR CONNECTION WITH STAGED SWITCHING TO ACHIEVE VARIABLE INDUCTANCE DURING CURRENT INTERRUPTION" the disclosure of which is incorporated herein by reference.

### FIELD OF THE INVENTION

The disclosed concept relates generally to circuit interrupters, and in particular, to current interruption devices for circuit interrupters.

### BACKGROUND OF THE INVENTION

Circuit interrupters, such as for example and without limitation, circuit breakers, are typically used to protect electrical circuitry from damage due to an overcurrent condition, such as an overload condition, a short circuit, or another fault condition, such as an arc fault or a ground fault. Circuit interrupters can include a mechanical interrupting device, a solid state (i.e. semiconductor) interrupting device, or a hybrid interrupting device that includes both a mechanical interrupting device and a solid state interrupting device.

A mechanical interrupting device includes mechanically operated separable electrical contacts, which operate as a switch. The separable contacts are typically positioned in series between a power source and a load, such that a line conductor connects the power source to one of the separable contacts and such that a load conductor connects another of the separable contacts to a load. The separable contacts are kept closed when power supplied to the circuit interrupter is within a normal operating range, and are opened when power supplied to the circuit interrupter exceeds the normal operating range. When the separable contacts are in contact with one another in a closed state, current can flow from the power source through the separable contacts and the line/load conductors to the load. When the separable contacts are separated from one another in an open state, current is prevented from flowing from the power source to the load. The separable contacts may be operated either manually by way of an operator handle, remotely by way of an electrical signal, or automatically in response to a detected fault condition.

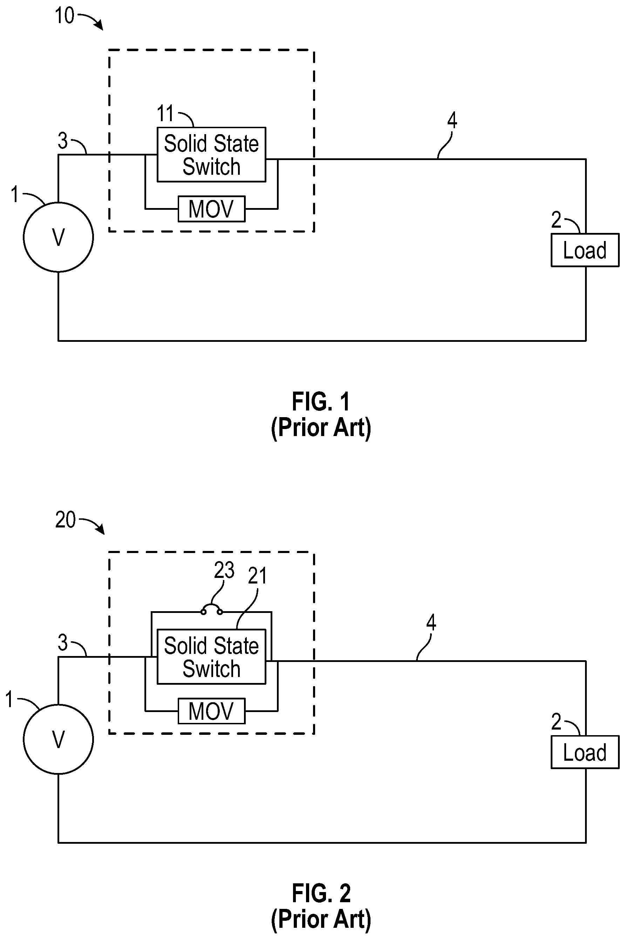

In a solid state interrupting device, a semiconductor switch functions in a manner analogous to how the separable contacts function in a mechanical interrupting device. That is, the semiconductor switch is positioned in series between a power source and a load, such that a line conductor connects the power source to the semiconductor switch and such that a load conductor connects the semiconductor switch to a load. FIG. 1 shows one such solid state circuit interrupter 10 that comprises a semiconductor switch 11 positioned in series between a power source 1 and a load 2. A line conductor 3 connects the power source 1 and the solid state circuit interrupter 10, and a load conductor 4 connects the solid state circuit interrupter 10 and the load 4. When powered ON, the semiconductor switch 11 acts as a closed switch such that current can flow from the power source 1 through the line conductor 3, through the semiconductor switch, and through the load conductor 4 to the load 2. When powered OFF, the semiconductor switch 11 acts as an open switch such that current is prevented from flowing from the power source 1 to the load 2. Control logic is used to keep the semiconductor switch 11 powered ON when power supplied to the solid state circuit interrupter 10 is within a normal operating range and to power OFF the semiconductor switch 11 when power supplied to the solid state circuit interrupter 10 exceeds the normal operating range.

In a circuit interrupter having only a mechanical interrupting device, when the separable contacts are opened under a fault condition or other non-zero energy state, any stored energy in the circuit interrupter will get released in the form of an electrical arc generated across the separable contacts. In a circuit interrupter having only a solid state interrupting device, interruption time is much faster as compared to a mechanical interrupting device, but the conduction losses (i.e. losses incurred from the semiconductor switch conducting current under normal operating conditions) are significantly higher than those of a mechanical interrupting device. A hybrid circuit interrupter is designed to utilize the advantages of both mechanical and solid state interrupters while minimizing the disadvantages of each.

In a hybrid circuit interrupter, a mechanical interrupting device and a semiconductor switch are connected in parallel with one another to form a hybrid interrupting device, and the hybrid interrupting device is positioned between a power source and a load. Hybrid circuit interrupters are designed so that, when power in the circuit interrupter is within a normal operating range, current can only flow through the separable contacts of the mechanical interrupting device, thus avoiding the relatively high conduction losses of a semiconductor switch. FIG. 2 shows one such hybrid circuit interrupter 20 that comprises a semiconductor switch 21 and mechanical separable contacts 23 connected in parallel with one another, with the hybrid circuit interrupter 20 being positioned in series between the power source 1 and the load 2. The line conductor 3 connects the power source 1 and the hybrid circuit interrupter 20, and the load conductor 4 connects the hybrid circuit interrupter 20 and the load 2. When power is within a normal operating range, the mechanical separable contacts 23 are kept closed and the semiconductor switch 21 is powered OFF. When a fault condition is detected, the mechanical separable contacts 23 are opened. After a small arc voltage is developed across the separable contacts 23, the semiconductor switch 21 is powered ON. The small arc voltage across the separable contacts 23 drives the current to commutate from the separable contacts 23 to the semiconductor switch 21. The semiconductor switch 21 is powered OFF shortly after commutation in order to fully interrupt the current, and the interruption time as compared to a purely mechanical interrupter is significantly reduced. As shown in FIGS. 1 and 2, a number of MOV (metal oxide varistor) devices or other transient suppressant devices are often included in solid state circuit interrupters and hybrid circuit interrupters in order to suppress transient voltages.

Although existing hybrid circuit interrupters and solid state interrupters are able to achieve relatively fast interruption times, achieving faster interruption times under fault conditions and reducing the magnitude of fault current as quickly as possible are always desirable.

There is thus room for improvement in circuit interrupters and in current interruption devices therefor.

### SUMMARY OF THE INVENTION

These needs, and others, are met by embodiments of a circuit interrupter that includes an inductor module connected in series with an interrupter module between a power source and a load. The inductor module includes a coupled inductor comprising an inductor core, a primary winding connected in series between the power source and the interrupter module, and a secondary winding connected at its line side to the power source. A load side of the secondary winding is connected to a first stage switching device, with the first stage switching device forming a switch between the secondary winding and the interrupter module. The interrupter module comprises a hybrid interrupter switch. The first stage switching device and the hybrid interrupter switch are kept closed under normal current conditions. When the first stage switching device is closed, the inductor module is close to being shorted out, such that there is very little flux in the inductor core. During a fault, the first stage switching device is opened first, which significantly increases flux in the inductor module and impedance of the overall circuit, and consequently decreases current through the interrupter module. The hybrid switch is opened second to complete interruption. Because opening the first stage switching device in the inductor module significantly decreases the current to be interrupted by the interrupter module and prospective peak current under a fault condition, the interrupter module can use components with significantly reduced current interruption ratings.

In accordance with one aspect of the disclosed concept, a circuit interrupter structured to be connected between a power source and a load comprises: a line conductor structured to be connected to the power source, a load conductor structured to be connected to the load, an inductor module, an interrupter module, and a controller. The inductor module comprises: an inductor core, a first winding that is a first conductor wound around a first portion of the inductor core, a second winding that is a second conductor wound around a second portion of the inductor core, and a first stage switch. The interrupter module is connected in series with the inductor module between the line conductor and the load conductor, such that a line side of the interrupter module is connected to a load side of the inductor module at a common node and such that a load side of the interrupter module is connected to the load conductor, the interrupter module being structured to interrupt current flowing from the power source to the load. A first end of the first winding is connected to the line conductor and a second end of the first winding is connected to the common node. A first end of the second winding is connected to the line conductor and a second end of the second winding is connected to a first end of the first stage switch. The first stage switch is connected between the second end of the second winding and the common node. The controller is configured to actuate the first stage switch to be closed under normal current conditions and to actuate the first stage switch to open upon detection of a fault current condition.

In accordance with another aspect of the disclosed concept, a method for conducting and interrupting current comprises: providing a circuit interrupter having an inductor module and an interrupter module connected in series between a line conductor and a load conductor; connecting the line conductor to a power source and connecting the load conductor to a load; keeping the first stage switch and the interrupter module in a closed state under normal current conditions; actuating the first stage switch to its open state upon detection of a fault condition; and after the first stage switch is actuated to its open state upon detection of the fault condition, actuating the interrupter module to its open state. The inductor module comprises: an inductor core, a first winding that is a first conductor wound around a first portion of the inductor core, a second winding that is a second conductor wound around a second portion of the inductor core, and a first stage switch. A line side of the interrupter module is connected to a load side of the inductor module at a common node. A first end of the first winding is connected to the line conductor and a second end of the first winding is connected to the common node. A first end of the second winding is connected to the line conductor and a second end of the second winding is connected to a first end of the first stage switch. The first stage switch is connected between the second end of the second winding and the common node.

### BRIEF DESCRIPTION OF THE DRAWINGS

A full understanding of the invention can be gained from the following description when read in conjunction with the accompanying drawings in which:
FIG. 1 is a schematic diagram of a prior art solid state circuit interrupter;
FIG. 2 is a schematic diagram of a prior art hybrid circuit interrupter;
FIG. 3 is a schematic diagram of an improved DC circuit interrupter that includes an inductor module having a solid state circuit interrupter for normal current conduction in series with an interrupter module, according to an exemplary embodiment of the disclosed concept;
FIG. 4 is a schematic diagram of an improved AC circuit interrupter that includes an inductor module having a solid state circuit interrupter for normal current conduction in series with an interrupter module, according to an exemplary embodiment of the disclosed concept;
FIG. 5 is a schematic diagram of an improved DC circuit interrupter that includes an inductor module having a hybrid circuit interrupter for normal current conduction in series with an interrupter module, according to an exemplary embodiment of the disclosed concept;
FIG. 6 is a schematic diagram of an improved AC circuit interrupter that includes an inductor module having a hybrid circuit interrupter for normal current conduction in series with an interrupter module, according to an exemplary embodiment of the disclosed concept;
FIG. 7 is a flow chart of a method for conducting and interrupting current between a power source and a load, according to an exemplary embodiment of the disclosed concept;
FIGS. 8-13 are graphs showing how current and voltage levels in an AC circuit breaker change when the novel inductor module shown in FIG. 4 is used; and
FIGS. 14-19 are graphs showing how current and voltage levels in an AC circuit breaker change when the novel inductor module shown in FIG. 6 is used.

### DETAILED DESCRIPTION OF THE INVENTION

Directional phrases used herein, such as, for example, left, right, front, back, top, bottom and derivatives thereof, relate to the orientation of the elements shown in the drawings and are not limiting upon the claims unless expressly recited therein.

As used herein, the singular form of "a", "an", and "the" include plural references unless the context clearly dictates otherwise.

As employed herein, employed herein, when ordinal terms such as "first" and "second" are used to modify a noun, such use is simply intended to distinguish one item from another, and is not intended to require a sequential order unless specifically stated.

As employed herein, the term "controller" shall mean a programmable analog and/or digital device that can store, retrieve and process data; a processor; a control circuit; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the statement that two or more parts or components are "coupled" shall mean that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other.

As employed herein, the term "number" shall mean one or an integer greater than one (i.e., a plurality).

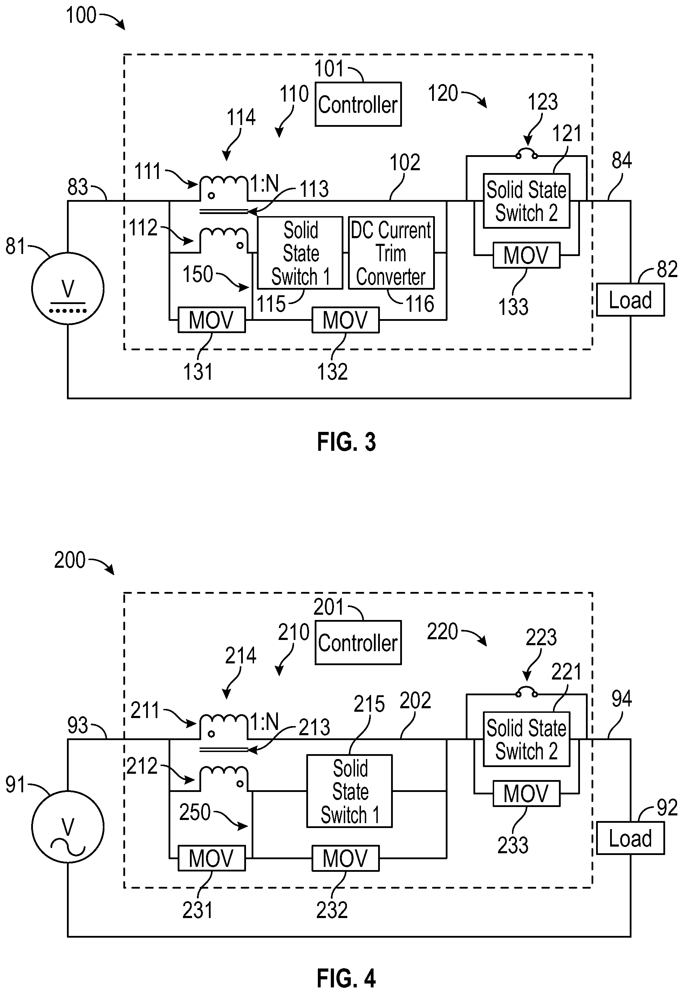

Reference is now made to FIG. 3 and FIG. 4, which respectively show a schematic diagram of a DC circuit interrupter 100 and a schematic diagram of an AC circuit interrupter 200 that includes a novel inductor module 110, 210 having a solid state switch and that implements staged current interruption, according to example embodiments of the disclosed concept. The DC circuit interrupter 100 and the AC circuit interrupter 200 function similarly and will be explained simultaneously, with any DC features specific to the DC circuit interrupter 100 being discussed separately as necessary and any AC features specific to the AC circuit interrupter 200 being discussed separately as necessary. The DC circuit interrupter 100 is structured to be connected in series between a DC power source 81 and a DC load 82, and the AC circuit interrupter 200 is structured to be connected in series between an AC power source 91 and an AC load 92. Both circuit interrupters 100, 200 include two primary stages, the first stage being a current reduction stage implemented by the novel inductor module 110, 210 and the second stage being a current interruption stage implemented by an interrupter module 120, 220. Each disclosed inductor module 110, 210 connects inductors to the line side of the circuit interrupter 100, 200 in a novel way that reduces the interruption current rating and peak prospective currents in the components of the interrupter modules 120, 220, as detailed further hereinafter.

Each circuit interrupter 100, 200 comprises a controller 101, 201. The controller 101, 201 is configured to power on and power off all solid state devices and to initiate opening of all mechanical separable contacts in the circuit interrupter 100, 200. To the extent that a solid state device in the circuit interrupter 100, 200 is described herein as being powered on or off and to the extent that the mechanical separable contacts in the circuit interrupter 100, 200 are described as being opened, it should be understood that all such powering on/off and opening are initiated by the controller 101, 201.

In each circuit interrupter 100, 200, the inductor module 110, 210 is connected in series with the interrupter module 120, 220 between the power source 81, 91 and the load 82, 92. Each interrupter module 120, 220 shown is a hybrid interrupter that functions similarly to known hybrid interrupters as previously described herein in conjunction with FIG. 2; however, whereas the prior art hybrid circuit interrupter 20 carries all current flowing to the load 2, each interrupter module 120, 220 in each disclosed circuit interrupter 100, 200 carries only a fraction of the total current flowing to the load 82, 92, because each inductor module 110, 210 is designed to also carry a fraction of the total current flowing to the load 82, 92. That is, including the inductor module 110, 210 in the circuit interrupter 100, 200 reduces the current that the interrupter module 120, 220 would otherwise have to carry in the absence of the inductor module 110, 210, as will be detailed further later herein.

The power source 81, 91, the inductor module 110, 210, the interrupter module 120, 220, and the load 82, 92 are all connected in series. The inductor module 110, 210 and the interrupter module 120, 220 each have a line side and a load side. The line side of the inductor module 110, 210 is connected to the power source 81, 91 by a line conductor 83, 93. The load side of the inductor module 110, 210 and the line side of the interrupter module 120, 220 are connected to each other by a common node 102, 202. The load side of the interrupter module 120, 220 is connected to the load 82, 92 by a load conductor 84, 94.

The inductor module 110, 210 includes a first conductor winding 111, 211 (referred to hereinafter as the "first winding" for brevity) and a second conductor winding 112, 212 (referred to hereinafter as the "second winding" for brevity) wrapped around an inductor core 113, 213. The first winding 111, 211, the second winding 112, 212, and the inductor core 113, 213 form a coupled inductor 114, 214. The inductor core 113, 213 can be produced from copper, for example and without limitation. The first winding 111, 211 is wound around a first portion of the inductor core 113, 213 and is connected at a first end to the line conductor 83,93 and at a second end to the common node 102, 202. The second winding 112, 212 is wound around a second portion of the inductor core 113, 213 and is connected at a first end to the line conductor 83, 93 and at a second end to a secondary side node 150, 250.

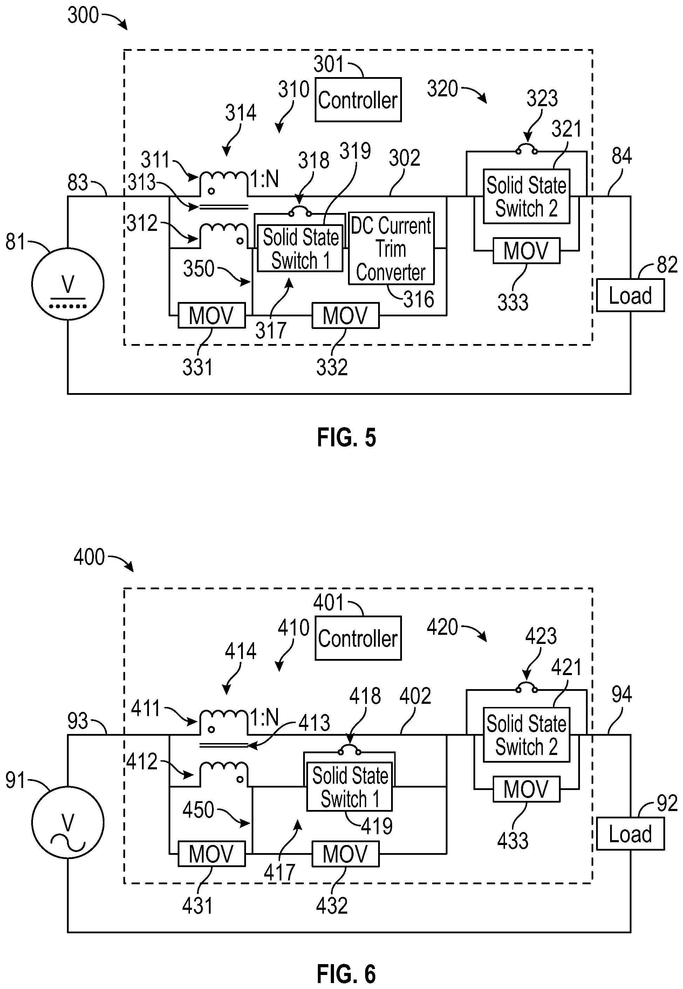

In the DC circuit interrupter 100, between the secondary side node 150 and the common node 102, a first stage switch 115 and a DC current trim converter 116 are connected in series, with the first stage switch 115 being connected between the secondary side node 150 and the DC current trim converter 116, and the DC current trim converter 116 being connected between the first stage switch 115 and the common node 102. The first stage switch 115 is specifically a solid state switch, and is sometimes referred to hereinafter as the solid state switch 115. The DC current trim converter 116 ensures that current is shared equally between the first winding 111 and the second winding 112, but an arrangement other than a trim converter can be used to ensure equal current sharing between the first winding 111 and the second winding 112 without departing from the scope of the disclosed concept. A first MOV 131 is connected in series between the line conductor 83 and the secondary side node 150 and in parallel with the second winding 112. A second MOV 132 is connected in series between the secondary side node 150 and the common node 102, and in parallel with the series connected solid state switch 115 and DC current trim converter 116. All MOV devices included in the circuit interrupters 100, 200, as well as in the circuit interrupters 300, 400 (discussed later herein and shown in FIGS. 5-6) are used to suppress transient voltages.

In the AC circuit interrupter 200, a first stage switch 215 is connected in series between the secondary side node 250 and the common node 202. Similar to the first stage switch 115, the first stage switch 215 is also a solid state switch and is sometimes referred to hereinafter as the solid state switch 215. In the AC circuit interrupter 200, the turns ratio of the first and second windings 211, 212 is chosen to ensure that current is naturally shared between the first and second windings 211, 212. A first MOV 231 is connected in series between the line conductor 93 and the secondary side node 250 and in parallel with the second winding 212. A second MOV 232 is connected in series between the secondary side node 250 and the common node 202, and in parallel with the solid state switch 215.

Referring once more to both the DC circuit interrupter 100 and the AC circuit interrupter 200, the interrupter module 120, 220 also includes a solid state switch 121, 221. Because the inductor module 110, 210 and the interrupter module 120, 220 both include a solid state (SS) switch, the solid state switch 115, 215 is referred to hereinafter as the "first stage SS switch" and the solid state switch 121, 221 is referred to hereinafter as the "second stage SS switch" in order to clearly differentiate between the solid state switch of the inductor module 110, 210 and the solid state switch of the interrupter module 120, 220.

The interrupter module 120, 220 is a hybrid interrupter that comprises the second stage SS switch 121, 221 and mechanical separable contacts 123, 223 connected in parallel with the second stage SS switch 121, 221. The interrupter module 120, 220 is connected at its line side to the common node 102 and connected at its load side to the load 82, 92. It should be understood that the interrupter module 120, 220 functions similarly to known hybrid circuit interrupters as previously described herein in conjunction with FIG. 2, such that the second stage SS switch 121, 221 is powered OFF (i.e. an open switch) under normal conditions and the mechanical contacts 123, 223 are closed under normal conditions. An interrupter MOV 133, 233 is connected in parallel with the second stage SS switch 121, 221 and the mechanical separable contacts 123, 223. The interrupter module 120, 220 can instead comprise only a mechanical interrupter or only a solid state interrupter instead of the hybrid interrupter shown in the figures without departing from the scope of the disclosed concept, but it is expected that most users of the circuit interrupter would prefer to use a hybrid interrupter in the interrupter module 120, 220, due to the mechanical separable contacts 123, 223 having relatively low conduction losses when conducting current under normal operating conditions and due to the relatively fast interruption speed of the second stage SS switch 121, 221 when interrupting fault current.

The controller 101, 201 is configured to ensure that the first stage SS switch 115, 215 is powered ON under normal operating conditions. The first stage SS switch 115, 215 acts as a closed switch when it is powered ON, and when the first stage SS switch 115, 215 is a closed switch, the coupled inductor 114, 214 is effectively shorted out such that there is virtually no flux in the inductor core 113, 213 and inductance in the inductor module 110, 210 is very low. Current flows through the inductor module 110, 210 and through the interrupter module 120, 220 in order to power the load 82, 92. In the AC circuit interrupter 200, due to the manner in which the first and second windings 211, 212 are wound as indicated by the dot convention in FIG. 4, current is naturally shared between the first and second windings 211, 212 to minimize the flux in the inductor core 213.

Upon occurrence of a fault condition, the controller 101, 201 is configured to power OFF the first stage SS switch 115, 215 so that the first stage SS switch 115, 215 becomes an open switch. The opening of the first stage SS switch 115, 215 causes opening of the second winding 112, 212, thus establishing flux in the inductor core 113, 213 and causing inductance of the circuit to increase significantly. The controller 101, 20 is also configured to open the mechanical contacts 123, 223 in the interrupter module 120, 220 shortly after powering OFF the first stage SS switch 115, 215 and then power ON the second stage SS switch 121, 221 in order to commutate current from the mechanical contacts 123, 223 to the second stage SS switch 121, 221. After commutation, the second stage SS switch 121, 221 is powered OFF in order to fully interrupt the current.

It is noted that including the coupled inductor 114, 214 in the circuit interrupter 100, 200 reduces the amount of current carried by the interrupting components in the interrupter module 120, 220, due to the first stage SS switch 115, 215 carrying a fraction of the total current, such that the current interrupted by the interrupter module 120, 220 during an interruption operation is significantly lower than it would be in the absence of the inductor module 110, 210. In addition, opening the first stage SS switch 115, 215 in the inductor module 110, 210 prior to opening the mechanical contacts 123, 223 and powering on the second stage SS switch 121, 221 in the interrupter module 120, 220 causes an increase in the impedance of the circuit, which also significantly reduces the current to be interrupted by the interrupter module 120, 220. That is, the inductor module 110, 210 interrupts a fraction of the current during an interruption operation, and interrupting current in the inductor module 110, 210 prior to commencing interruption in the interrupter module 120, 220 increases the impedance of the circuit such that the current to be interrupted in the interrupter module 120, 220 is further reduced due to the increased circuit impedance.

The winding ratio of the coupled inductor 114, 214 is 1:N, with N usually expected to have a value of 1 but being able to have a value greater than 1 where permitted, as determined by optimizing factors such as: the voltage rating of the first stage SS switch 115, 215, the targeted rate of current decay for the main circuit, and/or maximum acceptable losses that can be incurred by using the first stage SS switch 115, 215. The current rating of the first stage SS switch 115, 215 is 1/(N+1) of the main circuit and the voltage rating is N times the main circuit. When N=1, the rating of the first stage SS switch 115, 215 is ½ of the main circuit and the voltage rating will be the same as the main circuit. While the first stage SS switch 115, 215 will incur steady conduction losses during normal operating conditions, these losses will be less than or equal to ½ of the losses incurred in a known solid state circuit interrupter (such as the solid state circuit interrupter 10 shown in FIG. 1) that does not include the coupled inductor 114, 214. In addition, the first stage SS switch 115, 215 will open within a few tens of microseconds of the fault occurring, causing an immediate rise in the inductance of the main circuit and a reduction of current, such that the interrupter module 120, 220 only has to interrupt the reduced current.

Reference is now made to FIGS. 5 and 6, which respectively show a schematic diagram of a DC circuit interrupter 300 and a schematic diagram of an AC circuit interrupter 400 that includes a novel inductor module 310, 410 having a hybrid switch and that implements staged current interruption, according to example embodiments of the disclosed concept. The DC circuit interrupter 300 and the AC circuit interrupter 400 function similarly and will be explained simultaneously, with any DC features specific to the DC circuit interrupter 300 being separately discussed as necessary and any AC features specific to the AC circuit interrupter 400 being separately discussed as necessary. It will be appreciated from comparing FIG. 5 to FIG. 3 that the DC circuit interrupter 300 is structurally similar to the DC circuit interrupter 100 in most aspects, and it will similarly be appreciated from comparing FIG. 6 to FIG. 4 that the AC circuit interrupter 400 is structurally similar to the AC circuit interrupter 400 in most aspects. As such, all components in the circuit interrupters 300 and 400 that function equivalently to a corresponding component in the circuit interrupters 100 and 200 are numbered using similar reference numbers, such that the last two digits of a reference number used for a given component in FIG. 5 will be the same as the last two digits of the reference number used for the corresponding component in FIG. 3, and such that the last two digits of reference numbers used for a given component in FIG. 6 will be the same as the last two digits of the reference number used for the corresponding component in FIG. 4.

The sole structural difference between the DC circuit interrupters 300 and 100 and between the AC circuit interrupters 400 and 200 is that the inductor modules 310, 410 include a first stage switch 317, 417 that is a hybrid interrupter (referred to hereinafter primarily as the first stage hybrid interrupter switch 317, 417) instead of the first stage switch 115, 215 that is a solid state switch. The hybrid interrupter switch 317, 417 comprises mechanical contacts 318, 418 and a semiconductor switch 319, 419 connected in parallel. Because the inductor module 310, 410 and the interrupter module 320, 420 both include mechanical contacts, the mechanical contacts 318, 418 are referred to hereinafter as the "first stage mechanical contacts" and the mechanical contacts 323, 423 are referred to hereinafter as the "second stage mechanical contacts" in order to clearly differentiate between the mechanical contacts of the inductor module 310, 410 and the mechanical contacts of the interrupter module 320, 420.

In the DC circuit interrupter 300, the hybrid interrupter switch 317 and the DC current trim converter 316 are connected in series between the secondary side node 350 and the common node 302, with the hybrid interrupter switch 317 being connected between the secondary side node 350 and the DC current trim converter 316, and the DC current trim converter 316 being connected between the hybrid interrupter switch 317 and the common node 302. In the AC circuit interrupter 400, the hybrid interrupter switch 417 is connected in series between the secondary side node 450 and the common node 402.

The controller 301, 401 is configured to ensure that the first stage mechanical contacts 318, 418 are closed and that the semiconductor switch 319, 419 is powered OFF (i.e. an open switch) under normal operating conditions. When the first stage mechanical contacts 318, 418 are closed, the coupled inductor 314, 414 is close to being shorted out such that there relatively little flux in the coupled inductor 314, 414 and inductance in the inductor module 310, 410 is very low. Current flows through the inductor module 310, 410 and through the interrupter module 320, 420 in order to power the load 82, 92. It should be understood that the interrupter modules 320, 420 function similarly to the interrupter modules 120, 220, such that the second stage SS switch 321, 421 is powered OFF (i.e. an open switch) under normal conditions and the second stage mechanical contacts 323, 423 are closed under normal conditions. As with the interrupter module 120, 220, the interrupter module 320, 420 can instead comprise only a mechanical interrupter or only a solid state interrupter instead of the hybrid interrupter shown in the figures without departing from the scope of the disclosed concept, but it is expected that most users of the circuit interrupter 300, 400 would prefer to use a hybrid interrupter in the interrupter module 320, 420.

Upon the occurrence of a fault condition, the controller 301, 401 is configured to first open the first stage mechanical contacts 318, 418 of the hybrid interrupter switch 317, 417 and then power ON the semiconductor switch 319, 419 so as to commutate the current to the semiconductor switch 319, 419, and shortly after power OFF the semiconductor switch 319, 419 so that the hybrid interrupter switch 317, 417 becomes an open switch. The opening of the hybrid interrupter switch 317, 417 causes opening of the second winding 312, 412, thus establishing flux in the inductor core 313, 413 and causing inductance of the circuit to increase significantly. The controller 301, 401 is further configured to open the second stage mechanical contacts 323, 423 in the interrupter module 320, 420 shortly after opening the hybrid interrupter switch 317, 417 and then power ON the second stage SS switch 321, 421 in order to commutate current to the second stage SS switch 321, 421. After commutation, the second stage SS switch 321, 421 is powered OFF in order to fully interrupt the current.

As with the circuit interrupters 100, 200, including the coupled inductor 314, 414 in the circuit interrupter 300, 400 reduces the amount of current carried by the interrupting components in the interrupter module 320, 420, due to the first stage hybrid interrupter switch 317, 417 carrying a fraction of the total current, such that the current interrupted by the interrupter module 320, 420 during an interruption operation is significantly lower than it would be in the absence of the inductor module 310, 410. In addition, opening the first stage hybrid interrupter switch 317, 417 prior to opening the second stage mechanical contacts 323, 423 and powering on the second stage SS switch 321, 421 in the interrupter module 320, 420 causes an increase in the impedance of the circuit, which also significantly reduces the current to be interrupted by the interrupter module 320, 420.

The winding ratio of the coupled inductor 314, 414 is 1:N, with N usually expected to have a value of 1 but being able to have a value greater than 1 where permitted, as determined by optimizing factors such as: the voltage rating of the first stage hybrid interrupter switch 317, 417, the targeted rate of current decay for the main circuit, and/or maximum acceptable losses that can be incurred by using the first stage hybrid interrupter switch 317, 417. The current rating of the first stage hybrid interrupter switch 317, 417 is 1/(N+1) of the main circuit and the voltage rating is N times the main circuit. When N=1, the rating of the first stage hybrid interrupter switch 317, 417 is ½ of the main circuit and the voltage rating will be the same as the main circuit. The first stage hybrid interrupter switch 317, 417 will open within a few hundreds of microseconds of a fault occurring, causing an immediate rise in the inductance of the main circuit and a reduction of current, such that the interrupter module 320, 420 only has to interrupt the reduced current. It is noted that using hybrid interrupter switch 317, 417 in the first stage causes slower opening under a fault condition and requires increased inductor size as compared to the circuit interrupters 100, 200 that use the first stage SS switch 115, 215.

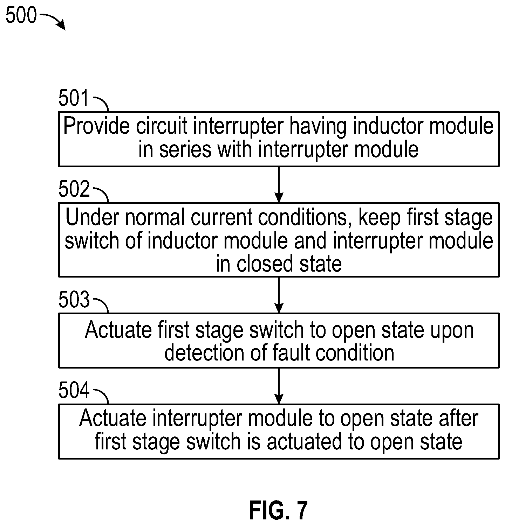

FIG. 7 is a flowchart of a method 500 of conducting and interrupting current, in accordance with an example embodiment of the disclosed concept. The method of FIG. 7 may be employed, for example, with any of the circuit interrupters 100, 200, 300, 400 shown in FIGS. 3-6 and is described in conjunction with the circuit interrupters 100, 200, 300, 400 shown in FIGS. 3-6. However, it will be appreciated that the method may be employed in other devices as well without departing from the scope of the disclosed concept. The method begins at 501 where the circuit interrupter 100, 200, 300, 400 having the inductor module 110, 210, 310, 410 connected in series with the interrupter module 120, 220, 320, 420 is provided and connected between a power source 81, 91 and a load 82, 92. At 502, the first stage switch 115, 215, 317, 417 is kept in a closed state and the interrupter module 120, 220, 320, 420 is kept in a closed state under normal current conditions. It should be understood that keeping the first stage solid stage switch 115, 215 of the circuit interrupter 100, 200 in a closed state signifies keeping the solid state switch 115, 215 powered ON and that keeping the first stage hybrid interrupter switch 317, 417 of the circuit interrupter 300, 400 in a closed state signifies keeping the first stage mechanical contacts 318, 418 closed while the first stage solid state switch 319, 419 is kept powered OFF.

At 503, upon detection of a fault condition, the first stage switch 115, 215, 317, 417 is actuated to an open state. It should be understood that actuating the first stage solid stage switch 115, 215 to the open state signifies powering OFF the solid state switch 115, 215. It should be understood that actuating the first stage hybrid interrupter switch 317, 417 to the open state signifies first opening the first stage mechanical contacts 318, 418 and powering ON the first stage solid state switch 319, 419 in order to commutate current to the first stage solid state switch 319, 419, and then powering OFF the first stage solid state switch 319, 419 in order to interrupt current in the inductor module 310, 410.

At 504, after the first stage switch 115, 215, 317, 417 is actuated to an open state due to detection of the fault condition, the interrupter module 120, 220, 320, 420 is actuated to an open state. It should be understood that actuating the interrupter module 120, 220, 320, 420 to the open state signifies first opening the second stage mechanical contacts 123, 223, 323, 423 and powering ON the second stage solid state switch 121, 221, 321, 421 in order to commutate current to the second stage solid state switch 121, 221, 321, 421, and then powering OFF the second stage solid state switch 121, 221, 321, 421 in order to interrupt current in the interrupter module 120, 220, 320, 420.

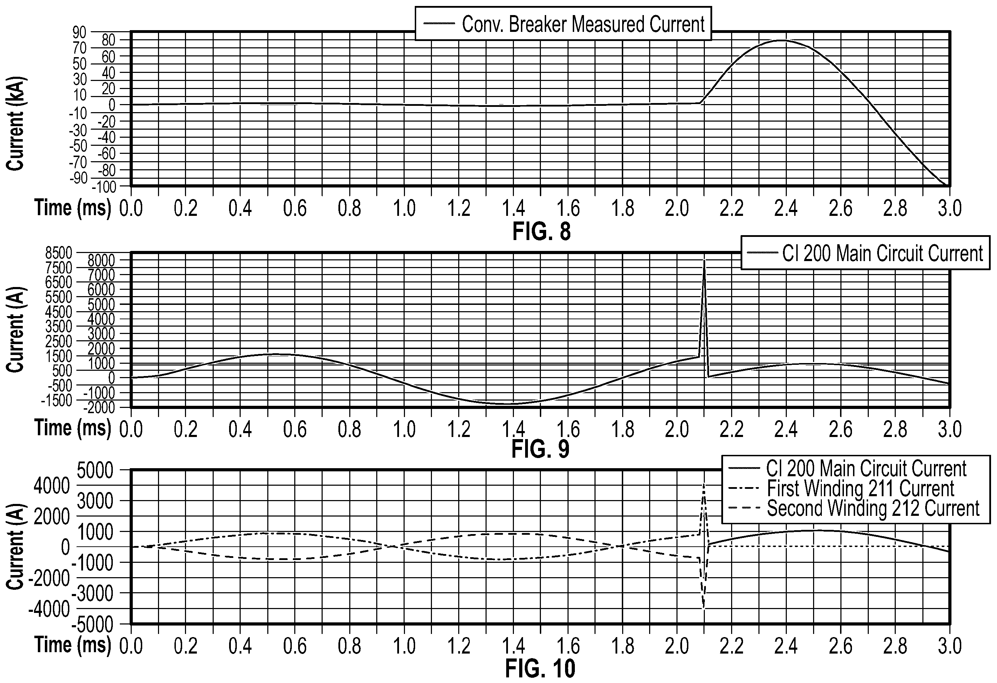

FIG. 8 shows the main circuit current flowing between an AC power source and a load in a conventional circuit breaker which only has a mechanical interrupter (e.g. mechanical separable contacts) available to interrupt current. FIG. 9 shows the main circuit current in the disclosed improved AC circuit interrupter 200 of FIG. 4 flowing between an AC power source and a load. In FIGS. 8 and 9, the sudden increase in current commencing just prior to 2.1 ms corresponds to a fault event, and the subsequent decrease after the fault current reaches a peak indicates that interruption is being performed. It is noted that main circuit current behavior in the AC circuit interrupter 200 is similar to that in the prior art solid state circuit interrupter 10 shown in FIG. 1 (no separate graph of main circuit current in the prior art solid state circuit interrupter 10 is shown in the figures). The advantage of using a solid state interrupter (i.e. the first stage solid state switch 215 in the circuit interrupter 200) instead of a mechanical interrupter to interrupt fault current is readily apparent when comparing FIG. 9 to FIG. 8. In particular, as shown in FIG. 8, the main circuit current reaches a peak of about 85 kA in the conventional circuit breaker, whereas in FIG. 9, the main circuit current peak value is limited to only around 8 kA in the disclosed improved AC circuit interrupter 200.

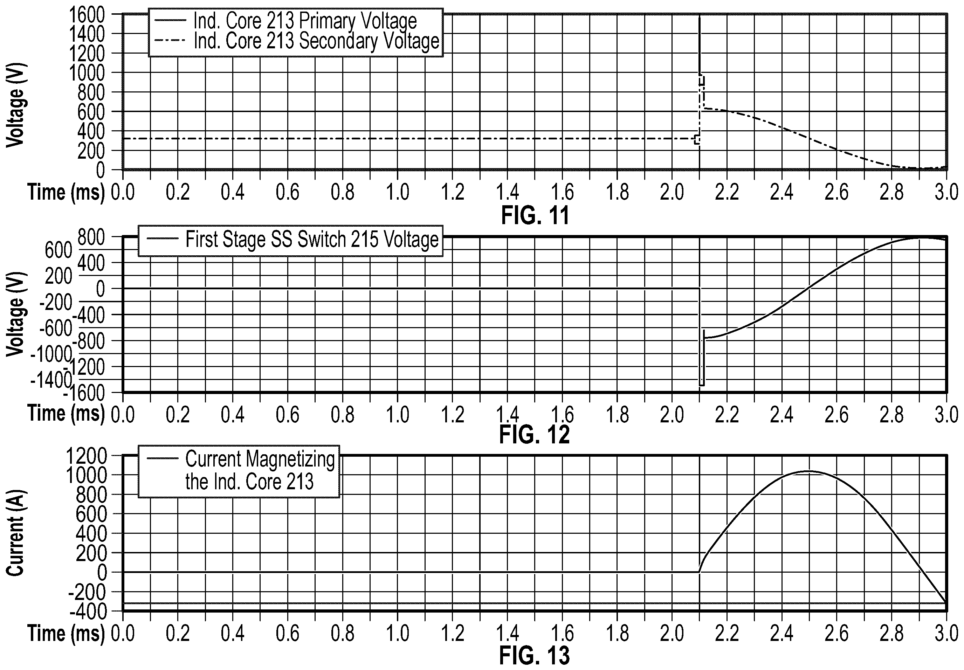

FIGS. 10-13 show various other electrical signals in the improved AC circuit interrupter 200 corresponding in time with the main circuit current shown in FIG. 9. FIG. 10 shows the current in the first and second windings 211, 212. FIG. 11 shows the voltage across the inductor core 213. FIG. 12 shows the voltage across first stage solid state switch 215. FIG. 13 shows the current that magnetizes the inductor core 213 when current flows in only the first winding 211 after the first stage solid state switch 215 has been powered OFF (thus opening the second winding 212) in the first stage of an interruption operation. It is noted that once the second winding 212 is opened, the peak current in the inductor module 210 is limited to about 4 kA (FIG. 10), and the peak current in the main circuit to be interrupted by the interrupter module 220 is limited to approximately less than 1 kA (main circuit current at approximately 2.5 ms in FIGS. 9-10).

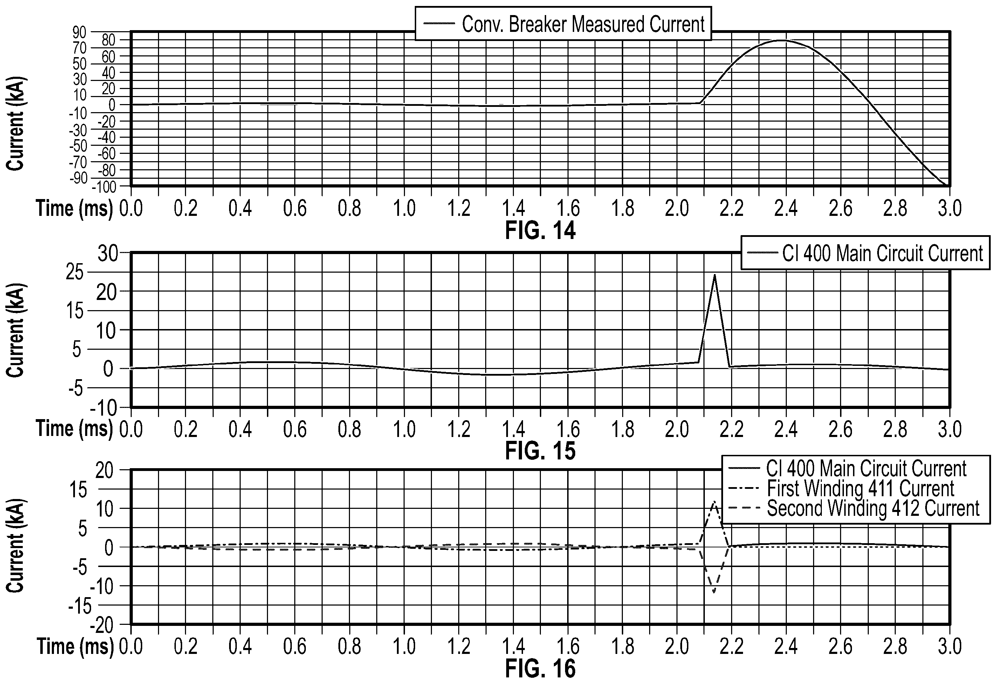

FIG. 14 again shows the main circuit current flowing between an AC power source and a load in a conventional circuit breaker which only has a mechanical interrupter (e.g. mechanical separable contacts) available to interrupt current. It is noted that the waveform shown in FIG. 14 is the same as the waveform shown in FIG. 8, and the waveform from FIG. 8 is included again in FIG. 14 to simplify comparing the waveform in FIG. 15 to the waveform from the conventional circuit breaker. FIG. 15 shows the main circuit current in the disclosed improved AC circuit interrupter 400 of FIG. 6 flowing between an AC power source and a load. In FIGS. 14 and 15, the sudden increase in current commencing just prior to 2.1 ms corresponds to a fault event, and the subsequent decrease after the fault current reaches a peak indicates that interruption is being performed. It is noted that main circuit current behavior in the AC circuit interrupter 400 is similar to that in the prior art hybrid circuit interrupter 20 shown in FIG. 2 (no separate graph of main circuit current in the prior art hybrid circuit interrupter 20 is shown in the figures). The advantage of using a hybrid interrupter (i.e. the first stage hybrid interrupter switch 417 in the circuit interrupter 400) instead of a mechanical interrupter to interrupt fault current is readily apparent when comparing FIG. 15 to FIG. 14. In particular, as shown in FIG. 14, the main circuit current reaches a peak of about 85 kA in the conventional circuit breaker, whereas in FIG. 15, the main circuit current peak value is limited to only around 24 kA in the disclosed improved AC circuit interrupter 400.

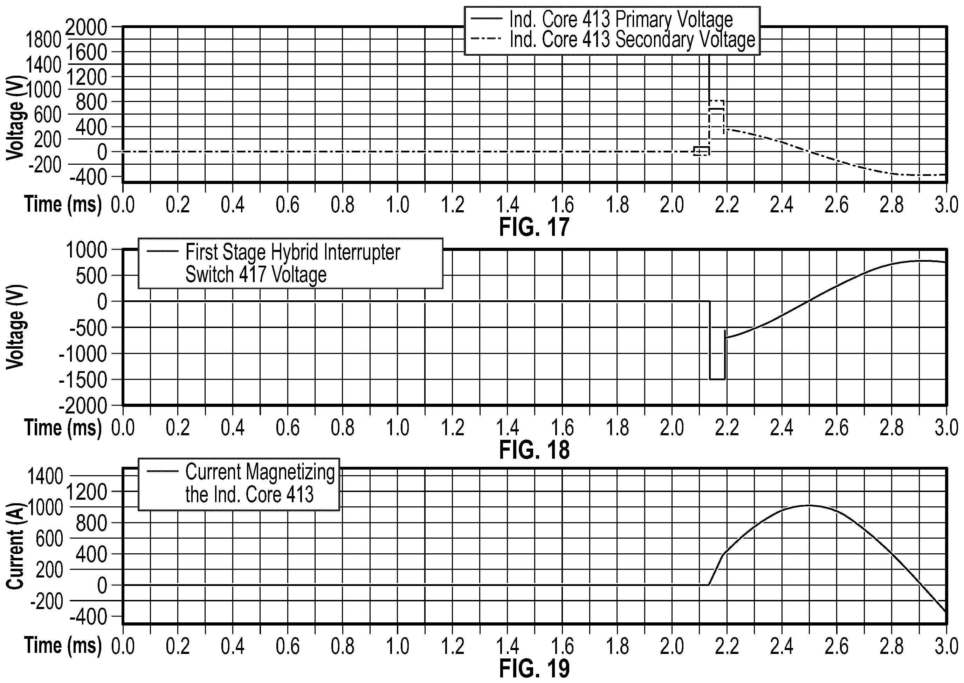

FIGS. 16-19 show various other electrical signals in the improved AC circuit interrupter 400 corresponding in time with the main circuit current shown in FIG. 15. FIG. 16 shows the current in the first and second windings 411, 412. FIG. 17 shows the voltage across the inductor core 413. FIG. 18 shows the voltage across first stage hybrid interrupter switch 417. FIG. 19 shows the current that magnetizes the inductor core 413 when current flows in only the first winding 411 after the first stage hybrid interrupter switch 417 has been actuated to an open state (thus opening the second winding 412) in the first stage of an interruption operation. It is noted that once the second winding 412 is opened, the peak current in the inductor module 410 is limited to about 12 kA (FIG. 16), and the peak current in the main circuit to be interrupted by the interrupter module 420 is limited to approximately less than 1 kA (main circuit current at approximately 2.5 ms in FIGS. 15-16).

In sum, the utilization of the inductor module 110, 210, 310, 410 in the disclosed circuit interrupters 100, 200, 300, 400 enable the interrupter components to carry only a fraction of the total current in the circuit interrupter. In addition, the staged interruption facilitated by actuating the inductor module 110, 210, 310, 410 to its open state before actuating the interrupter module 120, 220, 320, 420 to its open state leads to an increase in impedance of the circuit after the inductor module is actuated to the open state and a drastic reduction in the current to be interrupted by the interrupter module. That is, the inductor module only has to interrupt a fraction of the total current, and the interrupter module only has to interrupt a very low current. In existing circuit interrupters, as rating increases, more switches and power components are added, thus leading to an increase in size, cost and complexity of gate drivers, power supplies etc. For higher-rated circuit interrupters that will allow the inclusion of inductors, the disclosed invention enables the ratings of power components to be reduced. One significant and readily apparent advantage of this invention over existing products is that this invention reduces the rating of expensive power components and reduces system losses while realizing speeds close to a solid state circuit breaker.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A circuit interrupter structured to be connected between a power source and a load, the circuit interrupter comprising:
a line conductor structured to be connected to the power source;
a load conductor structured to be connected to the load;
an inductor module, the inductor module comprising:
an inductor core;
a first winding, the first winding being a first conductor wound around a first portion of the inductor core;
a second winding, the second winding being a second conductor wound around a second portion of the inductor core; and
a first stage switch;
an interrupter module connected in series with the inductor module between the line conductor and the load conductor, such that a line side of the interrupter module is connected to a load side of the inductor module at a common node and such that a load side of the interrupter module is connected to the load conductor, the interrupter module being structured to interrupt current flowing from the power source to the load; and
a controller,
wherein a first end of the first winding is connected to the line conductor and a second end of the first winding is connected to the common node,
wherein a first end of the second winding is connected to the line conductor and a second end of the second winding is connected to a first end of the first stage switch,
wherein the first stage switch is connected between the second end of the second winding and the common node, and
wherein the controller is configured to actuate the first stage switch to be closed under normal current conditions and to actuate the first stage switch to open upon detection of a fault current condition.

2. The circuit interrupter of claim 1,
wherein the controller is configured to actuate the interrupter module to be in a closed state under normal current conditions, and
wherein the controller is configured to actuate the interrupter module to an open state after the first stage switch has been actuated to open upon detection of the fault current condition.

3. The circuit interrupter of claim 1,
wherein the interrupter module comprises a second stage hybrid interrupter, the second stage hybrid interrupter comprising:
second stage mechanical contacts connected between the common node and the load conductor; and
a second stage solid state switch connected in parallel with the second stage mechanical contacts,
wherein the controller is configured to actuate the second stage mechanical contacts to be in a closed state under normal current conditions, and
wherein the controller is configured to actuate the second stage solid state switch to be powered OFF under normal current conditions.

4. The circuit interrupter of claim 3,
wherein the controller is configured to, upon detection of the fault current condition:
actuate the second stage mechanical contacts to open after the first stage switch has been actuated to open,
power ON the second stage solid state switch to commutate current from the second stage mechanical contacts to the second stage solid state switch, and
power OFF the second stage solid state switch after current is commutated to the second stage solid state switch.

5. The circuit interrupter of claim 1,
wherein the first stage switch is a solid state switch,
wherein the controller is configured to actuate the first stage switch to be powered ON under normal current conditions and to actuate the first stage switch to powered OFF upon detection of a fault current condition.

6. The circuit interrupter of claim 1,
wherein the first stage switch is a first stage hybrid interrupter, the first stage hybrid interrupter comprising:
first stage mechanical contacts connected between the second end of the second winding and the common node; and
a first stage solid state switch connected in parallel with the first stage mechanical contacts,
wherein the controller is configured to actuate the first stage mechanical contacts to be in a closed state under normal current conditions, and
wherein the controller is configured to actuate the first stage solid state switch to be powered OFF under normal current conditions.

7. The circuit interrupter of claim 6,
wherein the controller is configured to, upon detection of the fault current condition:
actuate the first stage mechanical contacts to open,
power ON the first stage solid state switch to commutate current from the first stage mechanical contacts to the first stage solid state switch, and
power OFF the first stage solid state switch after current is commutated to the first stage solid state switch.

8. The circuit interrupter of claim 1,
wherein the circuit interrupter is structured to be used with an AC power source, and
wherein the first and second windings have a turns ratio that ensures current is equally shared between the first and second windings.

9. The current interrupter of claim 1,
wherein the circuit interrupter is structured to be used with a DC power source,
wherein the inductor module further comprises a DC current trim converter,
wherein a second end of the first stage switch is connected to a first end of the DC trim converter, and
wherein a second end of the DC trim converter is connected to the common node.

10. A method for conducting and interrupting current, the method comprising:
providing a circuit interrupter having an inductor module and an interrupter module connected in series between a line conductor and a load conductor, the inductor module comprising:
an inductor core;
a first winding, the first winding being a first conductor wound around a first portion of the inductor core;
a second winding, the second winding being a second conductor wound around a second portion of the inductor core; and
a first stage switch;
connecting the line conductor to a power source and connecting the load conductor to a load;
keeping the first stage switch and the interrupter module in a closed state under normal current conditions;
actuating the first stage switch to its open state upon detection of a fault condition; and
after the first stage switch is actuated to its open state upon detection of the fault condition, actuating the interrupter module to its open state,
wherein a line side of the interrupter module is connected to a load side of the inductor module at a common node,
wherein a first end of the first winding is connected to the line conductor and a second end of the first winding is connected to the common node,
wherein a first end of the second winding is connected to the line conductor and a second end of the second winding is connected to a first end of the first stage switch, and
wherein the first stage switch is connected between the second end of the second winding and the common node.

11. The method of claim 10,
wherein the first stage switch is a solid state switch,
wherein keeping the first stage solid stage switch in the closed state comprises keeping the solid state switch powered ON, and
wherein actuating the first stage switch to its open state comprises powering OFF the solid state switch.

12. The method of claim 10,
wherein the first stage switch is a first stage hybrid interrupter comprising first stage mechanical separable contacts and a first stage solid state switch connected in parallel with the first stage mechanical separable contacts,
wherein keeping the first stage switch in the closed state under normal current conditions comprises keeping the first stage mechanical separable contacts closed and keeping the first stage solid state switch powered OFF, and
wherein actuating the first stage switch to its open state upon detection of the fault condition comprises:
opening the first stage mechanical separable contacts and powering ON the first stage solid state switch, and
then powering OFF the first stage solid state switch.

13. The method of claim 10,
wherein the interrupter module comprises a second stage hybrid interrupter comprising second stage mechanical separable contacts and a second stage solid state switch connected in parallel with the second stage mechanical separable contacts,
wherein keeping the interrupter module in the closed state under normal current conditions comprises keeping the second stage mechanical separable contacts closed and keeping the second stage solid state switch powered OFF, and
wherein, after the first stage switch is actuated to its open state upon detection of the fault condition, actuating the interrupter module to its open state comprises:
opening the second stage mechanical separable contacts and powering ON the second stage solid state switch, and
then powering OFF the second stage solid state switch.
